(19) Europäisches Patentamt

European Patent Office

Office européen des brevets

(11) **EP 4 552 721 B1**

(12) **EUROPEAN PATENT SPECIFICATION**

(45) Date of publication and mention
of the grant of the patent:
**22.04.2026 Bulletin 2026/17**

(21) Application number: **23208941.7**

(22) Date of filing: **10.11.2023**

(51) International Patent Classification (IPC):
**B01D 53/81** (2006.01)   **B01D 39/08** (2006.01)
**B01D 46/00** (2022.01)   **B01D 53/34** (2006.01)

(52) Cooperative Patent Classification (CPC):
**B01D 39/083;** B01D 53/81; B01D 2239/0407;
B01D 2239/0464; B01D 2239/065; B01D 2239/10;
B01D 2257/302; B01D 2257/404; B01D 2257/504;
B01D 2257/90; B01D 2258/06

(54) **A POLYMERIC STRUCTURE, A METHOD OF PRODUCING THE POLYMERIC STRUCTURE AND A FILTER INCLUDING THE POLYMERIC STRUCTURE**

POLYMERSTRUKTUR, VERFAHREN ZUR HERSTELLUNG DER POLYMERSTRUKTUR UND FILTER MIT DER POLYMERSTRUKTUR

STRUCTURE POLYMÈRE, PROCÉDÉ DE PRODUCTION DE LA STRUCTURE POLYMÈRE ET FILTRE COMPRENANT LA STRUCTURE POLYMÈRE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**14.05.2025 Bulletin 2025/20**

(73) Proprietor: **MANN+HUMMEL LIFE SCIENCES &
ENVIRONMENT HOLDING
SINGAPORE PTE. LTD.
Singapore 139234 (SG)**

(72) Inventors:
• **POWER, Joseph**
**71636 Ludwigsburg (DE)**
• **MÜNKEL, Karlheinz**
**71636 Ludwigsburg (DE)**
• **SCOPE, Andreas**
**71636 Ludwigsburg (DE)**

(74) Representative: **Mann + Hummel Intellectual
Property
Mann + Hummel
International GmbH & Co. KG
Schwieberdinger Straße 126
71636 Ludwigsburg (DE)**

(56) References cited:
EP-A1- 4 186 681    WO-A1-2022/132397
WO-A1-2022/207127    US-A1- 2020 122 071

## Description

### Technical Field

The invention relates to a polymeric structure, including a plurality of stacked layers, to a method of producing the polymeric structure including the stacked layers and a filter including a housing and a plurality of the polymeric structures.

### Background Art

Conventional devices for filtration generally consist of a support material, which is configured to provide rigidity, and a sorbent disposed on a surface of the support material as active filtration material. The sorbent may have an activity for sorbing, such as absorbing or adsorbing, a particular component, e.g., a contaminant, from a medium. Problems encountered in such devices involve insufficient sorbent loading on the support material. Further problems encountered in conventional devices are irregular pore sizes for efficient removal of the contaminant and/or delamination of the sorbent from the support material. Moreover, commonly encountered problems may involve high energy usage during production of the support material, and high costs associated with the production of the support material.

Moreover, the production of such conventional devices for filtration may involve several process steps of first producing parts of the support material, which may include several individual steps, followed by assembling the sorbent on the support material to produce the conventional devices. Such a step-heavy approach may decrease efficiency and waste manpower.

It is therefore an object to provide for an improved filter material and an improved method of producing the filter material. In turn, it is an object to provide for an improved filter that includes the improved filter material.

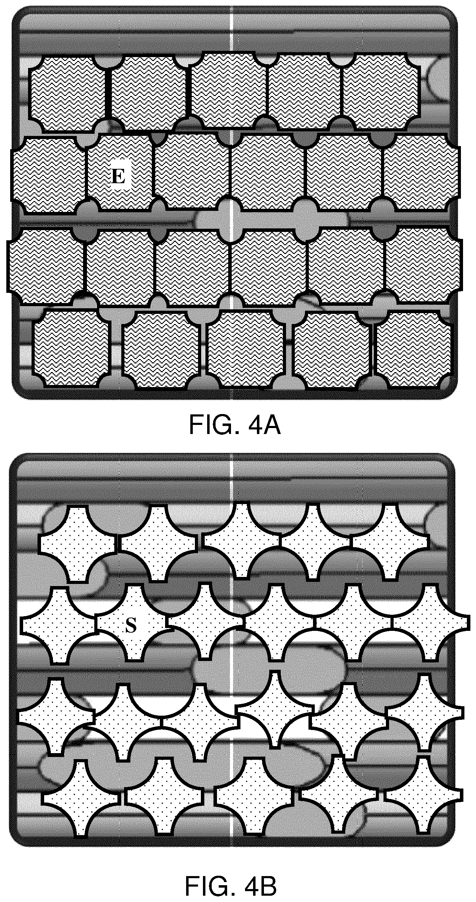

Documents WO 2022/132397 A1, EP 4186681 A1 and WO 2022/207127 A1 disclose three-dimensional structures using an additive manufacturing printing process. Document US 2020/122071 A1 discloses a filter support 10 which may comprise a thin, sheet-like material (e.g. netting, mesh, screen, scrim, woven or knitted material, etc.). The sorbent particles are positioned on the upstream side of the netting (as in FIG. 4), on the downstream side of the netting, on both sides of the netting or the sorbent particles may be sandwiched between the netting and a secondary retaining layer.

### Summary

In a first aspect, there is provided a polymeric structure. The polymeric structure may include a plurality of stacked layers formed of 3D-printed polymeric material, the plurality of stacked layers comprising a first layer comprising a first plurality of strands that are positioned substantially parallel to each other in a first direction and a second layer comprising a second plurality of strands that are positioned substantially parallel to each other in a second direction. The polymeric structure may include a plurality of spaces formed in the plurality of stacked layers. The polymeric structure may include a sorbent positioned in the plurality of spaces having a mass per $m^2$ of a surface area of the polymeric structure that is at least 200 g/$m^2$

According to various embodiments, the sorbent may be positioned in the plurality of spaces by admixture of the sorbent into the 3D-printed polymeric material of inner surfaces of the first and the second plurality of strands.

According to various embodiments, the 3D-printed polymeric material of the plurality of stacked layers may include a copolymer of acrylonitrile. The 3D-printed polymeric material may optionally be selected from the group consisting of acrylonitrile styrene acrylate, acrylonitrile butadiene styrene, or a combination thereof.

According to various embodiments, a material of the sorbent may be selected from the group consisting of activated carbon, metal organic frameworks, zeolites, molecular sieves, ion exchange resins and clay. The sorbent may optionally be impregnated to enable sorbability of a wider range of components, such as with at least one alkali carbonate salt such as $K_2CO_3$, $Li_2CO_3$, $Na_2CO_3$ or a mixed salt thereof, potassium salts such as KI or KOH, copper salts such as $Cu(SO_4)_2$ and $Cu(OAc)_2$, weak acids such as phosphoric acid or citric acid, tris(hydroxymethyl)aminomethane, or combinations thereof. Additionally or alternatively, the sorbent may be functionalized with amine groups.

According to various embodiments, the polymeric structure may have a thickness t in a direction that is perpendicular to an extension of the plurality of stacked layers ranging approximately between 0.6 mm and 0.7 mm.

According to various embodiments, the sorbent may have a mass per $m^2$ of the surface area of the polymeric structure that is at least 250 g/$m^2$.

According to various embodiments, the first direction of the first plurality of strands may be offset from the second direction of the second plurality of strands by an angle $\alpha$ ranging approximately between 45 degrees and 135 degrees.

In another aspect, there is provided a method of producing the polymeric structure. The method may include a first step of 3D-printing a first layer comprising a first plurality of strands that are positioned substantially parallel to each other in a first direction; and a second step of 3D-printing a second layer comprising a second plurality of strands that are positioned substantially parallel to each other in a second direction. The first layer and the second layer may be stacked to form a plurality of spaces in the first and the second stacked layers. A further step, which may be before, after or simultaneous with the first and the second step, may include providing an emulsion (E) comprising a solvent and a sorbent. The solvent and the sorbent may be mixed in a ratio to obtain an acceptable viscosity. Suitable viscosities may be between 50 and 9000 mPA·s. Subsequent to providing the emulsion, the method may include a further step of applying the emulsion on and into the first and the second stacked layers. Thereafter, the solvent may be removed from the applied emulsion to obtain the polymeric structure.

According to various embodiments, the solvent may include an organic solvent. The organic solvent may be selected from the group consisting of ethyl acetate, dichloromethane, an alcohol, an ether, acetone, or a combination thereof. In some embodiments, the organic solvent may include or substantially consist of acetone.

According to various embodiments, the emulsion may include 10 to 13 parts by weight of the solvent to 20 parts by weight of the sorbent.

According to various embodiments, the emulsion may be applied on and into the first and the second stacked layers by disposing the emulsion on a surface of the first and the second stacked layers and applying pressure.

According to various embodiments, the solvent may be removed from the emulsion by increasing a temperature of the first and the second stacked layers.

According to various embodiments, the emulsion may be applied to a top surface and a bottom surface of the first and the second stacked layers.

In another aspect, there is provided a filter device. The filter device may be an air filter device. The filter device may include a housing having at least one inlet (e.g., an air inlet) and at least one outlet (e.g., an air outlet). The filter device may include a plurality of the polymeric structures as described above that are received in the housing. A face of one of the polymeric structures may face a face of an adjacent polymeric structure. The one of the polymeric structures may face the face of the adjacent polymeric structure at a distance from the adjacent polymeric structure so as to form a channel (e.g., an air channel) therebetween. The channel may be in fluid communication with the at least one inlet and the at least one outlet.

According to various embodiments, each polymeric structure of the plurality of the polymeric structures received in the housing of the filter device comprises a 3-dimensional interlaced structure of the first and the second plurality of strands.

**Brief Description of Drawings**

The drawings show:

FIG. 1A          is a perspective view of the polymeric structure according to various embodiments.
FIG. 1B          is an exploded perspective view of the polymeric structure according to various embodiments.
FIG. 1C          is a side view of the polymeric structure according to various embodiments.
FIG. 1D          is an enlarged side view of the polymeric structure according to various embodiments.
FIG. 2A          is an exploded top view of the polymeric structure according to various embodiments.
FIG. 2B          is an enlarged exploded top view of the polymeric structure according to various embodiments.
FIG. 3           is a simplified flow diagram for an exemplary method according to an aspect of the method of producing a polymeric structure.
FIG. 4A          is a schematic depiction illustrating various aspects of the method for producing the polymeric structure.
FIG. 4B          is a schematic depiction illustrating various aspects of the method for producing the polymeric structure.
FIG. 5           is a schematic depiction illustrating various aspects of the method for producing the polymeric structure.
FIG. 6           is a view of a filter including a plurality of the polymeric structures according to various embodiments.
FIGS. 7A-7D      are illustrations in association with the Example relating to the polymeric structure according to various embodiments.

Detailed Description

The following detailed description refers to the accompanying drawings that show, by way of illustration, specific details and embodiments in which the disclosure may be practiced. These embodiments are described in sufficient detail to enable those skilled in the art to practice the disclosure. Other embodiments may be utilized and structural, and logical changes may be made without departing from the scope of the claims. The various embodiments are not necessarily mutually exclusive, as some embodiments can be combined with one or more other embodiments to form new embodiments.

Embodiments described in the context of one of a polymeric structure are analogously valid for a method of producing a polymeric structure and for a filter including a polymeric structure.

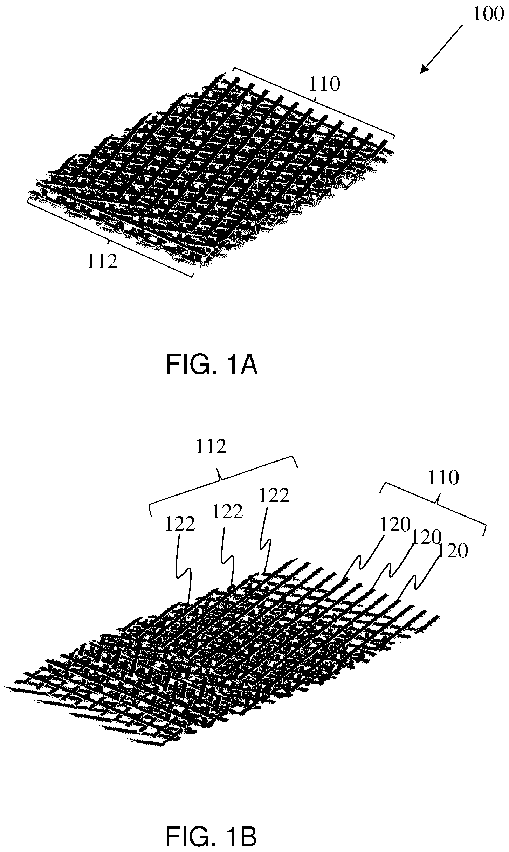

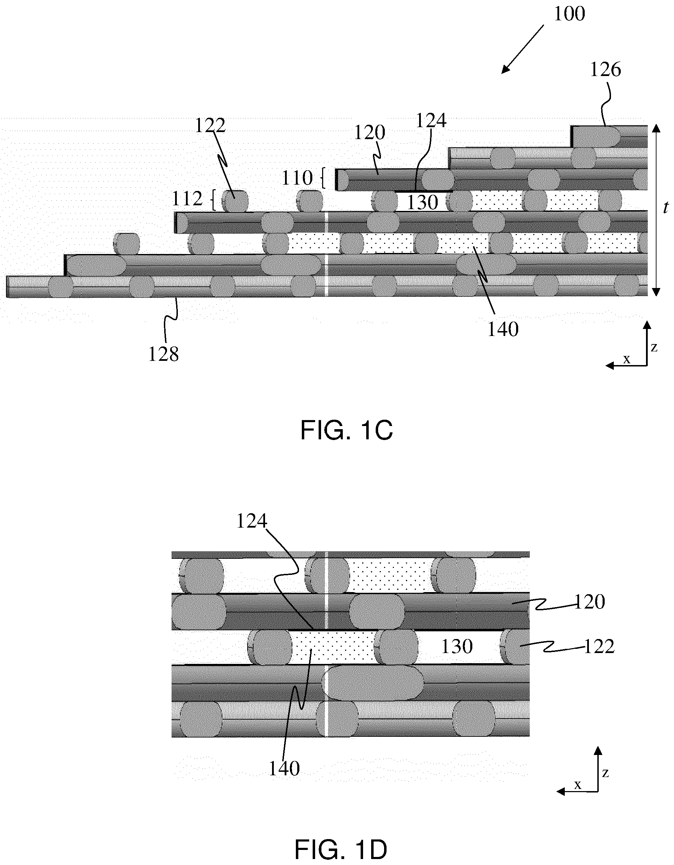

FIG. 1A, FIG. 1B, FIG. 1C and FIG. 1D show a polymeric structure 100 including a plurality of stacked layers 110, 112 in a perspective view (FIG. 1A), an exploded perspective view (FIG. 1B), a side view (FIG. 1C) and an enlarged side view (FIG. 1D). The plurality of stacked layers 110, 112 may extend in an x-y plane. In particular, a first layer 110 may extend in one direction x. A second layer 112 may extend in a direction y. The first layer 110 may be stacked on the second layer 112 in a direction z. The plurality of stacked layers 110, 112 may have two surfaces 126, 128, configured to face a medium from which a component, e.g. a contaminant, is to be removed. The plurality of stacked layers 110, 112 may be formed in a 3D-printing step (e.g., a first and a second 3D-printing step) from a polymeric material.

As shown in FIG. 1B (exploded view of FIG. 1A), the first layer 110 and the second layer 112 may each include a plurality of strands 120 and 122, respectively. Each plurality of strands 120, 122 may be substantially parallel to each other in an x-y plane. In other words, each strand of a first plurality of strands 120 is substantially parallel to an adjacent strand of the first plurality of strands 120 in a first direction in the x-y plane. Similarly, each strand of a second plurality of strands 122 is substantially parallel to an adjacent strand of the second plurality of strands 122 in a second direction in the x-y plane. The first direction in the x-y plane may be different from the second direction in the x-y plane. Accordingly, the first direction of the first plurality of strands 120 of the first layer 110 may be offset from the second direction of the second plurality of strands 122 of the second layer 112. Such an arrangement may also be called a plurality of interlaced strands, resulting in a 3-dimensional polymeric network of 3D-printed polymeric strands. "Interlaced strands", as used herein, thus refers to more than one strand that is used as a substantially fixed permanent structural member to form the plurality of stacked layers 110 and 112. The first and the second plurality of strands 120, 122 may thus be disposed in an angled manner, such that they intersect or create cross-sections, i.e. they are interlaced. For example, the first and the second plurality of strands 120, 122 of the plurality of stacked layers 110, 112 may form a grid.

FIG. 1C shows a side view of the polymeric structure 100, wherein the plurality of stacked layers 110 and 112 are shown as stacked in the z-direction. While the stacked layers 110 and 112 are shown as the third and fourth layer from the top of the Figure, it is understood that the presentation is exemplary for any pair of adjacent stacked layers within the polymeric structure 100. Moreover, while FIG. 1C shows that each layer from the bottom to the top is progressively shorter or stacked offset from another layer, this is merely for illustrative purposes and it is understood, that all of the stacked layers would extend to substantially the same length in the x direction.

As shown in FIG. 1C and the enlarged section shown in FIG. 1D, each strand of the first and the second plurality of strands 120, 122 may have inner surfaces 124. In other words, each strand of the first and the second plurality of strands 120, 122 may have a surface that faces a surface of an adjacent strand, termed as an inner surface 124. Since the plurality of stacked layers 110, 112 are stacked on each other in the z-direction, the inner surfaces 124 function as boundaries for cavities within the 3-dimensional polymeric network of the first and the second plurality of strands 120, 122. Such cavities are termed herein as "spaces" 130, which are defined by the inner surfaces 124 of the first and the second plurality of strands 120, 122, and thus are formed in the plurality of stacked layers 110, 112.

The spaces 130 defined by the inner surfaces 124 of strands of adjacent layers, such as the first and the second plurality of strands 120, 122, may be substantially regular, meaning that they may define substantially regular volumes (e.g., +/- 20% deviation, or +/- 10% deviation). The spaces 130 defined by the inner surfaces 124 of strands of the $n^{th}$ layer and the $(n+1)^{th}$ layer may have a different geometry from the spaces 130 defined by the inner surfaces 124 of strands of the $(n+1)^{th}$ layer and the $(n+2)^{th}$ layer, because the strands of the $(n+1)^{th}$ layer may be disposed on the strands of the $n^{th}$ layer at an angle that is different from the angle between the strands of the $(n+2)^{th}$ layer and the strands of the $(n+1)^{th}$ layer. The spaces 130 between the $n^{th}$ layer and the $(n+1)^{th}$ layer may be substantially regular. The spaces 130 between the $(n+1)^{th}$ layer and the $(n+2)^{th}$ layer may be substantially regular. Said regularity of the spaces 130 between adjacent layers may be enabled through a 3D printing method for obtaining the plurality of stacked layers 110, 112. Advantageously, with the regularity of the spaces 130 and the varying angles between the first direction and the second direction, the second direction and the third direction, ..., and the $n^{th}$ direction and the $(n+1)^{th}$ direction, it is possible to achieve a high retention of the sorbent 140 within the spaces 130 of the plurality of stacked layers 110, 112.

A sorbent 140 may be positioned in the spaces 130 of the plurality of stacked layers 110, 112, e.g., on the inner surfaces 124 of the first and the second plurality of strands 120, 122. In some embodiments, essentially all of the plurality of stacked layers 110, 112 may be covered with the sorbent 140, as opposed to only a partial coverage. In other words, substantially all of the polymeric structure 100 may be infiltrated with the sorbent 140. The sorbent 140 may be adapted for filtration. "Adapted for filtration" as used herein may refer to the sorbent 140 including active sites that are suitable for the removal of a particular component or a mixture of components, e.g., a contaminant or an impurity, from a medium. For example, the polymeric structure 100 may be part of an air filter, and the filtration may be an air filtration. Examples of components from the air to be removed by use of the sorbent 140 include undesirable odors, carbon dioxide ($CO_2$), volatile organic compounds, oxides of nitrogen, sulfur oxides and/or other harmful contaminants.

The sorbent 140 that is positioned in the spaces 130 may have a grammage or mass in gram per square meter (g/m$^2$) of a surface area of the polymeric structure 100 that is as high as, or above, 200 g/m$^2$. The surface area of the polymeric structure 100 refers to the surface 126, 128 of the polymeric structure 100 that is configured to face the medium

4

from which the particular component is supposed to be removed. The surface area of the polymeric structure 100 refers to the extension of the polymeric structure 100 in the x-y plane. This high density of sorbent 140 that is retained in the spaces 130 may have the advantage that a higher percentage of the particular component can be removed from the medium. For example, in embodiments where $CO_2$ is to be removed, and the sorbent 140 is a sorbent that is adapted for the removal of $CO_2$, a high percentage of $CO_2$ would be removed by the employment of the polymeric structure 100 provided herein. This high capacity for removal of the particular component may be a direct result of employing the polymeric structure 100 provided herein.

In other words, the ability of the plurality of stacked layers, as referred to herein, to retain the sorbent may be particularly high. For example, the filter material presented herein provides a weight increase per $m^2$ between the plurality of stacked layers alone (i.e. without sorbent) and the polymeric structure 100 (with sorbent) of 50% or more, preferably 60% or more.

Further advantages of the polymeric structure 100 may be associated with the direction of the strands of each successive layer being different. Due to the different directions of the strands of each layer, the sorbent 140 may advantageously infiltrate the polymeric structure 100 and/or be retained within the spaces 130.

More advantageously, the plurality of stacked layers 110, 112 that is used as a support material for the sorbent 140 is formed by a 3D-printing step, which is associated with less energy-usage and less costs as compared with conventional support materials. Due to its polymeric nature, the plurality of stacked layers 110, 112 also provide a higher flexibility with regard to the size and/or geometry of the spaces 130, simply by a change of the printing parameters. Accordingly, by using the plurality of stacked layers 110, 112, the size and/or geometry of the spaces 130 can be adjusted to the sorbent nature and sorbent size. Further advantageously, the plurality of stacked layers 110 may be lighter in weight due to their polymeric material.

The high density of sorbent 140 in the spaces 130, which, in turn, is associated with an increased removal of the particular component, may also be associated with the particular method of disposing the sorbent 140 in the spaces 130. For example, the method for disposing the sorbent 140 into the spaces 130 may include a method step that involves applying an emulsion on and into the plurality of stacked layers 110, 112. The emulsion may include the sorbent 140 and a solvent, whereby the solvent may, in a second method step, be evaporated from the plurality of stacked layers 110, 112. During the application of the emulsion, the emulsion may infiltrate through the polymeric structure 100, into the spaces 130, and may adhere to the surfaces 124, 126, 128. The solvent may also partially dissolve the surfaces 124, 126, 128 of the stacked layers 110, 112. More particularly, the polymeric material of the surfaces 124, 126, 128 may swell and incorporate, during swelling, the solvent including the sorbent 140. During evaporation of the solvent, the polymeric material at the surfaces (e.g., the inner surfaces 124 of the plurality of stacked layers 110, 112) may shrink back to their previous size. The sorbent 140 that was incorporated during the swelling of the polymeric material may then be partially retained within the polymeric material of the plurality of stacked layers 110, 112. The sorbent 140 in the emulsion adhered on the surfaces 124, 126, 128, and in particular inner surfaces 124, upon evaporation of the solvent, may be trapped by the strands of the plurality of stacked layers 110, 112 and thereby be retained in the polymeric structure 100. Advantageously, the emulsion may aid to position the sorbent 140 within the spaces 130 for better retention in the polymeric structure 100.

Accordingly, in some embodiments, the sorbent 140 that is positioned in the spaces 130 may be admixed into the polymeric material of the inner surfaces 124 of the first and the second plurality of strands 120, 122. In addition, the sorbent 140 may also be admixed to the polymeric material of the surface of the plurality of stacked layers 110, 112. Thus, the sorbent 140 may be interconnected with the material of the plurality of stacked layers 110, 112 (e.g., the sorbent 140 may be partially mechanically bonded with the polymeric material), and therefore differs from a conventional "surface adhesion".

Moreover, since the sorbent 140 is interconnected with the plurality of stacked layers 110, 112, the adhesion between the first and the second plurality of strands 120, 122, and in turn the plurality of stacked layers 110, 112, and the sorbent 140 is improved, which may help in preventing, or avoiding, delamination of the sorbent 140 from the plurality of stacked layers 110, 112. Accordingly, a particularly high mass of the sorbent 140 per surface area of the plurality of stacked layers 110, 112 can be achieved, which improves the efficiency in removing particular components from the medium. Therefore, in some examples, the sorbent 140 may be retained in the spaces 130 with a mass that is as high as, or above, 250 $g/m^2$.

According to some embodiments, the material of the plurality of stacked layers 110, 112 may include a polymer, that is suitable to be 3D-printed, in particular a thermoplastic polymer. Examples of such a thermoplastic polymer may include polyethylene, polypropylene, polystyrene, styrene-ethylene-butylene-styrene copolymer, polyester, polyvinyl chloride, polyvinylidene fluoride, polyamide, polytetrafluoroethylene, polylactic acid, polybenzimidazole, polycarbonate, polyether sulfone, polyoxymethylene, polyether ether ketone, polyetherimide, polyphenylene oxide, polyphenylene sulphide, a copolymer of styrene, a copolymer of acrylonitrile, or a combination thereof. In some embodiments, the material of the plurality of stacked layers 110, 112 may include a copolymer of styrene, a copolymer of acrylonitrile, or a combination thereof, or a combination thereof. In one example, the material of the plurality of 3D-printed polymeric layers 110, 112 may include, or substantially consist of, acrylonitrile styrene acrylate (ASA). In another example, the material of the plurality of stacked layers 110, 112 may include, or substantially consist of, acrylonitrile butadiene styrene (ABS). Advantageously, by using ASA, ABS, or a combination thereof, the solvent that is used for forming the emulsion can be less toxic, which is thus advantageous from an environmental point of view and/or for safety reasons.

According to some embodiments, a material of the sorbent 140 may be selected from any material that is capable of sorbing, e.g., absorbing or adsorbing, the particular component. In some embodiments, the sorbent 140 may be a solid inorganic or organic, non-polymeric or polymeric porous material. Optionally, the sorbent 140 may be granulated or in the form of a powder. Advantageously, by being granular, particulate or in the form of a powder, the formation of the emulsion of the sorbent 140 with the solvent would be facilitated. In some embodiments, the material of the sorbent 140 may include carbon, in particular activated carbon. In some embodiments, the material of the sorbent 140 may include a porous material selected from the group consisting of activated carbon, metal organic frameworks, zeolites, molecular sieves and clay. Using porous materials such as activated carbon would be especially beneficial for embodiments, where the particular component that is to be removed from the medium is $CO_2$, and the medium is air. The sorbent 140 may be in particulate, monolithic and loose, woven or nonwoven fibre form. The sorbent 140 (e.g., activated carbon) may be impregnated with at least one alkali carbonate salt selected from the group consisting of $K_2CO_3$, $Li_2CO_3$, $Na_2CO_3$ as well as mixed salts thereof.

According to some embodiments, the sorbent 140 may be a solid material capable of adsorbing carbon dioxide at its surface. It can be a porous support material which is chemically functionalized at its surface to provide chemical adsorption sites for carbon dioxide. For example, the functional groups introduced at the surface may be primary, secondary, and/or tertiary amine groups.

As shown in FIG. 1C, the polymeric structure 100 may have a thickness $t$ in a direction z, that is perpendicular to the two directions x and y in which the plurality of stacked layers extend. The thickness t may be any suitable thickness, as long as the sorbent incorporated is at least 200 $g/m^2$. The thickness $t$ is a function of the amount of sorbent incorporated. On the other hand, it is desirable to reduce the thickness $t$ as much as possible. Possible thicknesses $t$ may be 2 mm or less, or 1.5 mm or less, or 1 mm or less. The thickness t may be about 0.1 mm to 1.0 mm, or about 0.4 mm to 0.8 mm, or about 0.6 mm to 0.7 mm. It is possible for the sorbent incorporated into polymeric structure 100 to be less than 200 $g/m^2$. In such examples, it is possible for polymeric structure 100 to have a thickness t less than what is disclosed. However, the sorption capacity and/or service life of a resultant product may be lowered. A thickness of each strand of the the first and the second plurality of strands 120, 122 may vary depending on its position in relation to an adjacent strand on which it is disposed. A thickness of each strand may also be dependent on the thickness t and the number of layers.

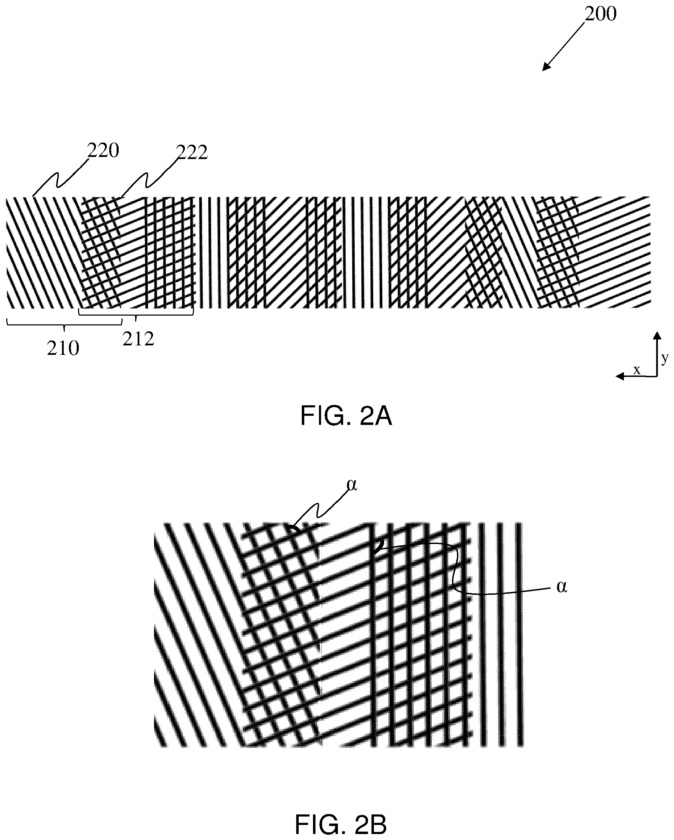

With reference to FIG. 2A, and as mentioned herein before, a first and a second plurality of strands 220, 222 may be disposed in an angled manner, such that they create cross-sections, i.e. they are interlaced. In this regard, FIG. 2A shows in which angles strands of adjacent layers, such as the first and the second plurality of strands 220, 222, may be positioned to each other. While FIG. 2A and FIG. 2B show separate layers of the plurality of stacked layers 210, 212 as being offset from each other, it is understood that this only serves illustrative purposes, and each stacked layer of the plurality of stacked layers 210, 212 would typically be aligned in a z-direction. FIG. 2B is an enlarged view of the interlaced cross-sections formed by the angled manner of the layering. FIG. 2B shows three stacked layers having two different angles $\alpha$. In particular, an angle $\alpha$ indicates the degree by which the direction of strands of an nth layer may be offset from the direction of strands of the (n+1)th layer. For example, angle $\alpha$ indicates the degree by which the first direction of the first plurality of strands 220 may be offset from the second direction of the second plurality of strands 222. In another example, angle $\alpha$ indicates the degree by which the second direction of the second plurality of strands 222 may be offset from a third direction of a third plurality of strands. In some embodiments, the angle $\alpha$ may be larger than 0 degrees and smaller than 180 degrees, or between 45 degrees and 135 degrees. In some embodiments, each angle $\alpha$ may be the same or different.

In a second aspect, there is provided a method 300 of producing a polymeric structure. The method 300 may, in some embodiments, produce the polymeric structure 100, 200 described herein before. The method 300 may include a first step 302 of 3D-printing a first layer including a first plurality of strands. The 3D-printing step may be configured to 3D-print each strand of the first plurality of strands to be positioned substantially parallel to each other in a first direction. The method 300 may include a second step 304 of 3D-printing a second layer comprising a second plurality of strands. The 3D-printing step may be configured to 3D-print each strand of the second plurality of strands to be positioned substantially parallel to each other in a second direction. The 3D-printing step may include stacking the first layer and the second layer on each other to give a plurality of stacked layers. The method may further include that the first direction of the first plurality of strands is different from the second direction of the second plurality of strands, such that they are angled as discussed above in the description of the first aspect. By the first and the second plurality of strands being disposed in a first and a second direction, that are different from each other, the method would include a step 306 of forming a plurality of spaces in the first and the second stacked layers. At the same time, or before or after 3D-printing the plurality of stacked layers as described above, the method may further include a step 308 of providing an emulsion E comprising a solvent and a sorbent S. The solvent and the sorbent in the emulsion may be mixed in a ratio to obtain an acceptable viscosity. In a subsequent method step 310, the emulsion may be applied on and into the first and the second stacked layers. Once all of the emulsion impregnated substantially all of the plurality of stacked layers, the method may include a step 312 of removing the solvent from the applied emulsion E to obtain the polymeric structure.

The particular ratio between the solvent and the sorbent in the emulsion may advantageously produce an emulsion that is beneficial for application of the emulsion. On one hand, the emulsion at this ratio of solvent and the sorbent is not too much of a slurry. Accordingly, impregnation of the plurality of stacked layers with the emulsion may occur completely and regularly, so that a regular and complete positioning of the sorbent may be enhanced. On the other hand, the emulsion at this ratio of solvent and the sorbent is not too much of a liquid. Accordingly, the emulsion can thus stick to the plurality of stacked layers to enhance a regular and complete positioning of the sorbent.

Advantageously, the method of producing the polymeric structure facilitates the assembly of the support material that is used for the polymeric structure 100, 200, by being produced in one single printing operation, before adding the emulsion to position the sorbent in the polymeric structure 100, 200. Hence, the method as presented herein may increase efficiency and save manpower.

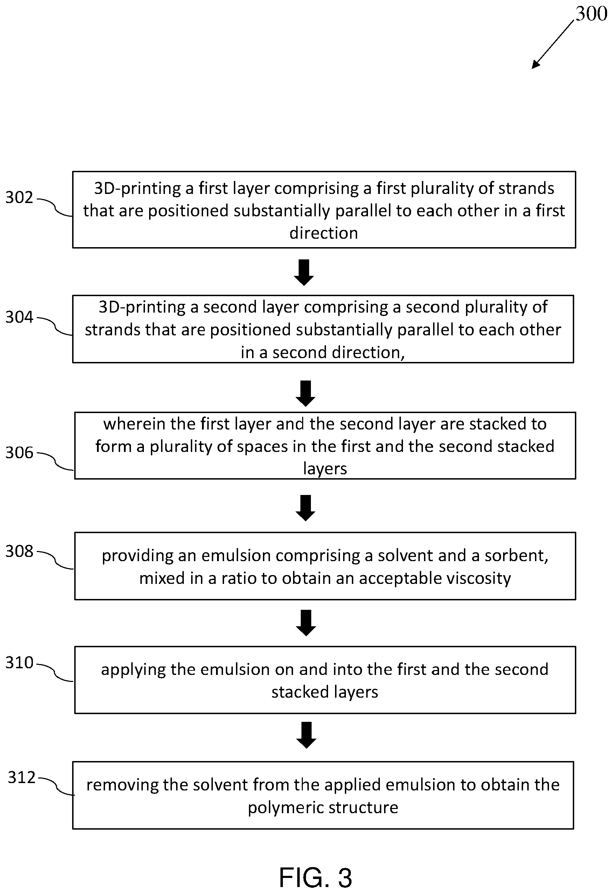

FIG. 3 shows a simplified flow diagram for an exemplary method 300 according to an aspect of the present method 300.

The operation 302 may be directed to 3D a first layer including a first plurality of strands that are positioned substantially parallel to each other in a first direction.

The operation 304 may be directed to 3D-printing a second layer comprising a second plurality of strands that are positioned substantially parallel to each other in a second direction.

The operation 306 may be directed to the first layer and the second layer being stacked to form a plurality of spaces in the first and the second stacked layers.

The operation 308 may be directed to providing an emulsion including a solvent and a sorbent, mixed in a ratio to obtain an acceptable viscosity.

The operation 310 may be directed to applying the emulsion on and into the first and the second stacked layers.

The operation 312 may be directed to removing the solvent from the applied emulsion to obtain the polymeric structure.

In some embodiments, the 3D printing step may be carried out by using fuse deposition modeling (FDM). This may have the advantage that clogging of the spaces may be avoided. Clogging of the spaces may occur due to undesirable residues from other printing methods, and may have the effect that more randomized ranges of space sizes may be obtained, and/or spaces that would be too fine for subsequent application of the sorbent. Another advantage of using FDM is the ability to use organic polymers, from which the 3D-printed structure is preferably made.

With reference to FIG. 4A and FIG. 4B, the sorbent S may be provided as an emulsion E together with a solvent to increase flowability. Accordingly, the emulsion E may include the sorbent and the solvent, which is identified in FIG. 4A as follows:

After evaporation of the solvent, the sorbent S remains in the spaces, which is signified in FIG. 4B with a smaller volume (since the solvent evaporated from the emulsion) as follows:

The solvent may be one that preferably does not dissolve the sorbent, but retains it in an emulsion. This has an advantageous effect on the viscosity of the emulsion. The solvent may additionally be compatible with the 3D-printed polymeric material. For example, the solvent should not completely dissolve the 3D-printed polymeric material, but may achieve some swelling on the inner and outer surfaces of the 3D-printed polymeric material, having the advantageous effects that are discussed earlier herein. Accordingly, the choice of the solvent may be made in dependency of the choice of the 3D-printed polymeric material.

An advantageous combination of the 3D-printed polymeric material and the solvent may be the choice of a copolymer of acrylonitrile as the 3D-printed polymeric material and an organic solvent as a solvent. Accordingly, in some embodiments, the 3D-printed polymeric material of the plurality of stacked layers may include a copolymer of acrylonitrile and the solvent may include an organic solvent. The organic solvent may be selected from the group consisting of ethyl acetate, dichloromethane, an alcohol (e.g., methanol, ethanol, butanol, isopropanol, or a combination thereof), an ether (e.g., diethyl ether, tert-butyl methyl ether, dioxane, tetrahydrofuran, or a combination thereof), acetone, or a combination thereof. In some embodiments, the organic solvent may include or substantially consist of acetone.

In some embodiments, the viscosity may be achieved by a particular ratio between the solvent and the sorbent. For example, the emulsion may include 10 to 13 parts by weight of the solvent and 20 parts by weight of the sorbent. This ratio may be particularly advantageous for embodiments, where the solvent is a water-soluble organic solvent (e.g., acetone), and the sorbent is carbon (e.g., activated carbon).

In some embodiments, a set of data may be predetermined or determined prior to the steps of 3D printing. In some embodiments, the set of data may include the viscosity of the emulsion, the properties of the sorbent or combinations thereof. Accordingly, in some embodiments, the first and second 3D printing steps may include selecting a distance between two adjacent strands of the first plurality of strands, selecting a distance between two adjacent strands of the second plurality of strands, selecting an angle $\alpha$ by which the first direction of the first plurality of strands may be offset from the second direction of the second plurality of strands, based on the predetermined set of data.

The distance between adjacent strands may have an effect on the penetration ability of the emulsion into the spaces of the plurality of stacked layers. The distance selected may achieve a desired penetration depth of the emulsion. The emulsion may penetrate the 3D-printed structure to coat substantially all of the stacked layers. In other words, the distance between two adjacent strands and/or the viscosity of the emulsion may be selected such that the emulsion seeps through (i.e., penetrates) all of the 3D-printed grid.

The angle $\alpha$ by which the direction of strands of an $n^{th}$ layer may be offset from the direction of strands of an $(n+1)^{th}$ layer may have an effect on the retention of the sorbent. The angles $\alpha$ selected may achieve a desired loading of the sorbent within the spaces of the plurality of stacked layers as described herein.

During the 3D printing process, the first and the second pluralities of strands may be printed to have a desired pattern, which may produce improved space geometries. Such improved space geometries may, for example, be determined in a simulation.

Generally, any application method may be employed for the application of the emulsion E to the plurality of stacked layers, preferably an application method is used that applies sufficient pressure for impregnation of the emulsion into the spaces within the plurality of stacked layers. The pressure may be beneficial due to the particular range of viscosity referred to herein. In some embodiments, the emulsion may only be applied to one surface of the plurality of stacked layers. For example, the emulsion may only be applied to the surface of the plurality of stacked layers that faces the medium to be purified. Alternatively, the emulsion may only be applied to the surface of the plurality of stacked layers that faces away from the medium to be purified). In other embodiments, the emulsion is applied on and into the first and the second stacked layers by disposing the emulsion on a top surface and a bottom surface of the first and the second stacked layers. Advantageously, such an embodiment may produce a more even distribution of the sorbent within the spaces of the first and the second stacked layers.

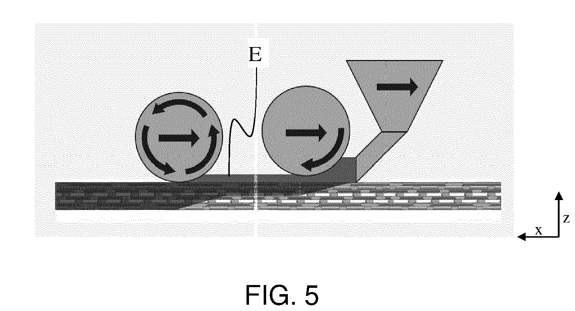

With reference to FIG. 5, the emulsion E may be applied to the plurality of stacked layers by applying pressure, for example, by applying pressure with a roller (e.g., in a clockwise manner) or more than one roller. The second roller (shown on the left of FIG. 5) moves in the other direction of the first roller (e.g., anti-clockwise), and may have the function of collecting excess material from a surface of the plurality of stacked layers. An additional or alternative application method may be to apply the emulsion E to the plurality of stacked layers by using a knife blade, or to scrape it in, optionally in manual manner.

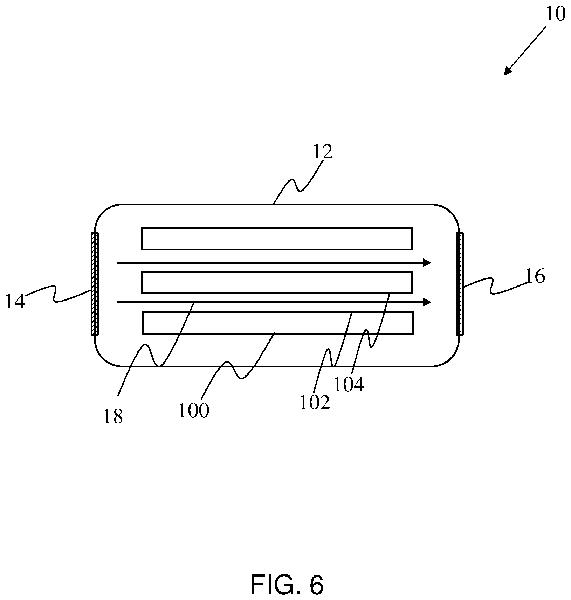

With reference to FIG. 6, a plurality of the polymeric structures 100 as disclosed herein may be stacked on each other or assembled in substantially parallel arrangement to each other to form a filter device 10. For example, the polymeric structures 100 may be arranged at a distance, such that a surface of one of the polymeric structures 102, across its longest extension, faces a surface of another one of the polymeric structures 104, across its longest extension. The longest extension may be an extension in the x-y plane introduced previously. The filter device 10 may be an air filter device configured for the purification of air. The filter device 10 may include a housing 12 which may include the polymeric structures 100, e.g., the polymeric structures 100 may be assembled in the housing 12. In some embodiments, the polymeric structures 100 may be assembled as flow-through filter elements. "Flow-through filter elements" are used herein to describe a filtration element that filters out components, e.g. contaminants, from a medium, by flowing the medium through channels formed by the walls or surfaces of one or more filtration elements. The contaminants in the medium contact active sites in the walls or surfaces of the filtration elements and are removed. The medium gets more purified as the medium advances towards the end of the channels. The housing 12 may include an inlet 14 and an outlet, e.g., an air inlet and an air outlet. Between the inlet and the outlet may be channels 18 formed between the polymeric structures 100, which may be in fluid communication with the at least one inlet and the at least one outlet. In other words, for embodiments, wherein the filter device 10 is an air filter, the (contaminated) air that enters the housing 12 via the inlet 14 would flow through the channel 18 and pass by the plurality of the polymeric structures 100, 200 in the channel 18. A particular component (e.g., carbon dioxide) contained in the air, may be removed from the air by use of the plurality of the polymeric structures 100, 200. Purified air would thus leave the housing 12 through the outlet 16.

The properties of polymeric structures 100, 200, the filter device 10 and the parameters of the method 300 presented above are intended to be exemplary for the polymeric structure 100. It will be apparent to those ordinary skilled practitioners that the foregoing process operations may be modified without departing from the scope of the claims.

The term "comprising" shall be understood to have a broad meaning similar to the term "including" and will be understood to imply the inclusion of a stated integer or operation or group of integers or operations but not the exclusion of any other integer or operation or group of integers or operations. This definition also applies to variations on the term "comprising" such as "comprise" and "comprises".

By "about" in relation to a given numerical value, such as for thickness and height, it is meant to include numerical values within 10 % of the specified value.

### Example

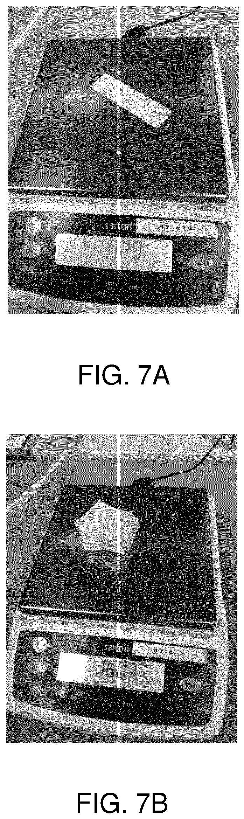

In one example, the mass per $m^2$ of a plurality of stacked layers as described herein (without sorbent) was compared with the mass per $m^2$ of several polymeric structures (with sorbent) as provided herein. With reference to FIG. 7A, the mass of a plurality of stacked layers (without sorbent) was 0.29 g. The plurality of stacked layers has a surface area of 0.00176 $m^2$, whereby the surface is an extension in the x-y plane introduced previously, that is, a surface facing a medium. Thus, a mass per $m^2$ of a plurality of stacked layers (without sorbent) was calculated to be 165 $g/m^2$, following the equation:

$$0.29 \text{ g} / 0.00176 \text{ m}^2 = 165 \text{ g/m}^2.$$

With reference to FIG. 7B, 20 samples of polymeric structures with the sorbent as described herein was 16.07 g. Thus, a mass per $m^2$ of the sorbent in a polymeric structure (averaged over 20 samples) was calculated to be 291 $g/m^2$, following the equation:

$$((16.07 \text{ g} / 20) - 0.29 \text{ g}) / 0.00176 \text{ m}^2 = (0.8035 \text{ g} - 0.29 \text{ g}) / 0.00176 \text{ m}^2$$
$$= 291 \text{ g/m}^2.$$

The relative weight ratio between the sorbent as shown in FIG. 7B and the polymeric structures comprising the sorbent, i.e., the average sorbent loading, may then be calculated as follows: (0.8035 g - 0.29 g) / 0.8035 g x 100% = 64%

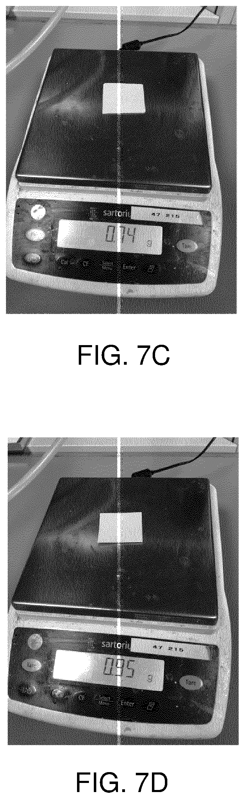

With reference to FIG. 7C, the mass of the lightest sample of a polymeric structure with sorbent as described herein was 0.74 g. Thus, a mass per $m^2$ of the sorbent was calculated to be 255 $g/m^2$, following the equation: (0.74 g - 0.29 g) / 0.00176 $m^2$
= 255 $g/m^2$.
The relative weight ratio between the sorbent as shown in FIG. 7C and the polymeric structure comprising the sorbent, i.e., the sorbent loading of the lightest sample, may then be calculated to be 61%.

With reference to FIG. 7D, the mass of the heaviest sample of a polymeric structure with sorbent as described herein was 0.95 g. Thus, a mass per $m^2$ of the sorbent was calculated to be 375 $g/m^2$, following the equation: (0.95 g - 0.29 g) / 0,00176 $m^2$
= 375 $g/m^2$.
The relative weight ratio between the sorbent as shown in FIG. 7D and the polymeric structure comprising the sorbent, i.e., the sorbent loading of the heaviest sample, may then be calculated to be 69%.

Accordingly, a mass of sorbent per $m^2$ of surface area of the polymeric structure that is as high as, or above, 200 $g/m^2$ and/or a weight increase per $m^2$ between the plurality of stacked layers alone (i.e. without sorbent) and the polymeric structure 100 (with sorbent), i.e. sorbent loading, of 50% or more, preferably 60% or more, is obtained by using the polymeric structure as disclosed herein.

While the present disclosure has been particularly shown and described with reference to specific aspects, it should be understood by those skilled in the art that various changes in form and detail may be made therein without departing from the scope of the present disclosure as defined by the appended claims. The scope of the present disclosure is thus indicated by the appended claims and all changes which come within the meaning and range of equivalency of the claims are therefore intended to be embraced.

### Claims

1. A polymeric structure (100) comprising:

a plurality of stacked layers (110, 112) formed of 3D-printed polymeric material, the plurality of stacked layers (110, 112) comprising a first layer (110) comprising a first plurality of strands (120) that are positioned substantially parallel to each other in a first direction and a second layer (112) comprising a second plurality of strands (122) that are positioned substantially parallel to each other in a second direction,

a plurality of spaces (130) formed in the plurality of stacked layers (110, 112); and

a sorbent (140) positioned in the plurality of spaces (130) having a mass per $m^2$ of a surface area of the polymeric structure that is at least 200 $g/m^2$, wherein the surface area of the polymeric structure refers to the extension of the polymeric structure in the x-y plane and the mass per $m^2$ is calculated as described in the description.

2. The polymeric structure (100) of claim 1, wherein the sorbent (140) is positioned in the plurality of spaces (130) by admixture of the sorbent (140) into the 3D-printed polymeric material of inner surfaces (124) of the first and the second plurality of strands (120, 122).

3. The polymeric structure (100) of claim 1 or claim 2, wherein the 3D-printed polymeric material of the plurality of stacked layers (110, 112) comprises a copolymer of acrylonitrile, optionally selected from the group consisting of acrylonitrile styrene acrylate, acrylonitrile butadiene styrene, or a combination thereof.

4. The polymeric structure (100) of any one of the preceding claims, wherein a material of the sorbent is selected from the group consisting of activated carbon, metal organic frameworks, zeolites, molecular sieves, ion exchange resins and clay, optionally wherein the sorbent is functionalized with amine groups.

5. The polymeric structure (100) of any one of the preceding claims, wherein the polymeric structure (100) has a thickness t in a direction that is perpendicular to an extension of the plurality of stacked layers (110, 112) ranging approximately between 0.6 mm and 0.7 mm.

6. The polymeric structure (100) of any one of the preceding claims, wherein the sorbent (140) has a mass per $m^2$ of the surface area of the polymeric structure that is at least 250 $g/m^2$.

7. The polymeric structure (200) of any one of the preceding claims, wherein the first direction of the first plurality of strands (220) is offset from the second direction of the second plurality of strands (222) by an angle $\alpha$ ranging approximately between 45 degrees and 135 degrees.

8. A method (300) of producing the polymeric structure of any one of claims 1 to 7, the method comprising:

3D-printing a first layer comprising a first plurality of strands that are positioned substantially parallel to each other in a first direction (302);

3D-printing a second layer comprising a second plurality of strands that are positioned substantially parallel to each other in a second direction (304),

wherein the first layer and the second layer are stacked to form a plurality of spaces in the first and the second stacked layers (306);

providing an emulsion (E) comprising a solvent and a sorbent (S);

applying the emulsion (E) on and into the first and the second stacked layers (310); and

removing the solvent from the applied emulsion (E) to obtain the polymeric structure (312).

9. The method of claim 8, wherein the solvent comprises an organic solvent, optionally wherein the organic solvent is selected from the group consisting of ethyl acetate, dichloromethane, an alcohol, an ether, acetone, or a combination thereof, optionally wherein the organic solvent comprises or substantially consists of acetone.

10. The method of claim 8 or claim 9, wherein the emulsion comprises 10 to 13 parts by weight of the solvent to 20 parts by weight of the sorbent.

11. The method of any one of the preceding claims 8 to 10, wherein the emulsion (E) is applied on and into the first and the second stacked layers by disposing the emulsion (E) on a surface of the first and the second stacked layers and applying pressure.

12. The method of any one of the preceding claims 8 to 11, wherein the solvent is removed from the emulsion by increasing a temperature of the first and the second stacked layers.

13. The method of any one of the preceding claims 8 to 12, wherein the emulsion is applied to a top surface and a bottom surface of the first and the second stacked layers.

14. A filter device (10) comprising:

a housing (12) having at least one inlet (14) and at least one outlet (16);
a plurality of the polymeric structures (100, 200) of any one of claims 1 to 7 received in the housing (12), wherein a face (102) of one of the polymeric structures (100, 200) faces a face (104) of an adjacent polymeric structure (100, 200) and at a distance from the adjacent polymeric structure (100, 200) so as to form a channel (18) therebetween, wherein the channel is in fluid communication with the at least one inlet (14) and the at least one outlet (16).

15. The filter device (10) of claim 14, wherein each polymeric structure of the plurality of the polymeric structures (100, 200) received in the housing (12) of the filter device (10) comprises a 3-dimensional interlaced structure of the first and the second plurality of strands (120, 122 and 220, 222).

**Patentansprüche**

1. Polymerstruktur (100) umfassend:

eine Vielzahl von Stapellagen (110, 112), die aus 3D-gedrucktem Polymermaterial gebildet sind, wobei die Vielzahl von Stapellagen (110, 112) eine erste Lage (110) mit einer ersten Vielzahl von Strängen (120), die im Wesentlichen parallel zueinander in einer ersten Richtung angeordnet sind, und eine zweite Lage (112) mit einer zweiten Vielzahl von Strängen (122) umfasst, die im Wesentlichen parallel zueinander in einer zweiten Richtung angeordnet sind,
eine Vielzahl von Zwischenräumen (130), die in der Vielzahl von Stapellagen (110, 112) ausgebildet sind; und
ein Sorptionsmittel (140), das in der Vielzahl von Zwischenräumen (130) angeordnet ist und eine Masse pro $m^2$ einer Oberfläche der Polymerstruktur von mindestens 200 $g/m^2$ aufweist, wobei sich die Oberfläche der Polymerstruktur auf die Ausdehnung der Polymerstruktur in der x-y-Ebene bezieht und die Masse pro $m^2$ wie in der Beschreibung berechnet wird.

2. Polymerstruktur (100) nach Anspruch 1, wobei das Sorptionsmittel (140) in die Vielzahl der Zwischenräume (130) durch Einmischen des Sorptionsmittels (140) in das 3D-gedruckte Polymermaterial der Innenflächen (124) der ersten und der zweiten Vielzahl von Strängen (120, 122) positioniert ist.

3. Polymerstruktur (100) nach Anspruch 1 oder Anspruch 2, wobei das 3D-gedruckte Polymermaterial der Vielzahl von Stapellagen (110, 112) ein Copolymer aus Acrylnitril umfasst, das optional aus der Gruppe ausgewählt ist, die aus Acrylnitril-Styrol-Acrylat, Acrylnitril-Butadien-Styrol oder aus einer Kombination davon besteht.

4. Polymerstruktur (100) nach einem der vorstehenden Ansprüche, wobei ein Material des Sorptionsmittels aus der Gruppe ausgewählt ist, die aus Aktivkohle, metallorganischen Gerüsten, Zeolithen, Molekularsieben, Ionenaustauschharzen und Ton besteht, wobei das Sorptionsmittel optional mit Amingruppen funktionalisiert ist.

5. Polymerstruktur (100) nach einem der vorstehenden Ansprüche, wobei die Polymerstruktur (100) eine Dicke $t$ in einer Richtung senkrecht zu einer Ausdehnung der Vielzahl von Stapellagen (110, 112) hat, die ungefähr zwischen 0,6 mm und 0,7 mm liegt.

6. Polymerstruktur (100) nach einem der vorstehenden Ansprüche, wobei das Sorptionsmittel (140) eine Masse pro $m^2$ der Oberfläche der Polymerstruktur von mindestens 250 $g/m^2$ aufweist.

7. Polymerstruktur (200) nach einem der vorstehenden Ansprüche, wobei die erste Richtung der ersten Vielzahl von Strängen (220) gegenüber der zweiten Richtung der zweiten Vielzahl von Strängen (222) um einen Winkel $\alpha$ versetzt ist, der ungefähr zwischen 45 Grad und 135 Grad liegt.

8. Verfahren (300) zur Herstellung der Polymerstruktur nach einem der Ansprüche 1 bis 7, wobei das Verfahren umfasst:

3D-Drucken einer ersten Lage, die eine erste Vielzahl von Strängen umfasst, die im Wesentlichen parallel zueinander in einer ersten Richtung (302) angeordnet sind;

3D-Drucken einer zweiten Lage, die eine zweite Vielzahl von Strängen umfasst, die im Wesentlichen parallel zueinander in einer zweiten Richtung (304) angeordnet sind,

wobei die erste Lage und die zweite Lage gestapelt werden, um eine Vielzahl von Zwischenräumen in der ersten und der zweiten Stapellage zu bilden (306);

Bereitstellen einer Emulsion (E), die ein Lösungsmittel und ein Sorptionsmittel (S) umfasst;

Aufbringen der Emulsion (E) auf und in die erste und die zweite Stapellage (310); und

Entfernen des Lösungsmittels aus der aufgetragenen Emulsion (E), um die Polymerstruktur (312) zu erhalten.

9. Verfahren nach Anspruch 8, wobei das Lösungsmittel ein organisches Lösungsmittel umfasst, wobei das organische Lösungsmittel optional aus der Gruppe ausgewählt ist, die aus Ethylacetat, Dichlormethan, einem Alkohol, einem Ether, Aceton oder einer Kombination davon besteht, wobei das organische Lösungsmittel optional Aceton umfasst oder im Wesentlichen aus Aceton besteht.

10. Verfahren nach Anspruch 8 oder Anspruch 9, wobei die Emulsion 10 bis 13 Gewichtsanteile des Lösungsmittels auf 20 Gewichtsanteile des Sorptionsmittels umfasst.

11. Verfahren nach einem der vorstehenden Ansprüche 8 bis 10, wobei die Emulsion (E) auf und in die erste und die zweite Stapellage aufgebracht und eingebracht wird, indem die Emulsion (E) auf eine Oberfläche der ersten und der zweiten Stapellage aufgebracht und Druck ausgeübt wird.

12. Verfahren nach einem der vorstehenden Ansprüche 8 bis 11, wobei das Lösungsmittel aus der Emulsion durch Erhöhen einer Temperatur der ersten und zweiten Stapellage entfernt wird.

13. Verfahren nach einem der vorstehenden Ansprüche 8 bis 12, wobei die Emulsion auf eine Oberseite und eine Unterseite der ersten und der zweiten Stapellage aufgebracht wird.

14. Filtervorrichtung (10), umfassend:

ein Gehäuse (12) mit mindestens einem Einlass (14) und mindestens einem Auslass (16);

eine Vielzahl von Polymerstrukturen (100, 200) gemäß einem der Ansprüche 1 bis 7, die in dem Gehäuse (12) aufgenommen sind,

wobei eine Fläche (102) einer der Polymerstrukturen (100, 200) einer Fläche (104) einer benachbarten Polymerstruktur (100, 200) zugewandt ist und einen Abstand von der benachbarten Polymerstruktur (100, 200) aufweist, um zwischen ihnen einen Kanal (18) zu bilden, wobei der Kanal in Fluidverbindung mit dem mindestens einen Einlass (14) und dem mindestens einen Auslass (16) steht.

15. Filtervorrichtung (10) nach Anspruch 14, wobei jede Polymerstruktur der Vielzahl von Polymerstrukturen (100, 200), die in dem Gehäuse (12) der Filtervorrichtung (10) aufgenommen sind, eine dreidimensionale, ineinander verschachtelte Struktur der ersten und der zweiten Vielzahl von Strängen (120, 122 und 220, 222) umfasst.

**Revendications**

1. Structure polymère (100) comprenant:

une pluralité de couches empilées (110, 112) formées d'un matériau polymère imprimé en 3D, la pluralité de couches empilées (110, 112) comprenant une première couche (110) comprenant une première pluralité de brins (120) qui sont positionnés sensiblement parallèles les uns aux autres dans une première direction et une seconde couche (112) comprenant une seconde pluralité de brins (122) qui sont positionnés sensiblement parallèles les uns aux autres dans une seconde direction,

une pluralité d'espaces (130) formés dans la pluralité de couches empilées (110, 112); et

un sorbant (140) positionné dans la pluralité d'espaces (130) ayant une masse par m² d'une superficie de la structure polymère qui vaut au moins $200 \text{ g/m}^2$, dans laquelle la superficie de la structure polymère fait référence à l'extension de la structure polymère dans le plan x-y et la masse par m² est calculée de la façon décrite dans la description.

2. Structure polymère (100) selon la revendication 1, dans laquelle le sorbant (140) est positionné dans la pluralité d'espaces (130) par mélange du sorbant (140) dans le matériau polymère imprimé en 3D de surfaces internes (124) des première et seconde pluralités de brins (120, 122).

3. Structure polymère (100) selon la revendication 1 ou la revendication 2, dans laquelle le matériau polymère imprimé en 3D de la pluralité de couches empilées (110, 112) comprend un copolymère d'acrylonitrile, facultativement choisi dans le groupe constitué d'acrylonitrile-styrène-acrylate, d'acrylonitrile-butadiène-styrène, ou d'une combinaison de ceux-ci.

4. Structure polymère (100) selon l'une quelconque des revendications précédentes, dans laquelle un matériau du sorbant est choisi dans le groupe constitué de charbon actif, structures organométalliques, zéolites, tamis moléculaires, résines échangeuses d'ions et argile, facultativement dans laquelle le sorbant est fonctionnalisé avec des groupes amine.

5. Structure polymère (100) selon l'une quelconque des revendications précédentes, dans laquelle la structure polymère (100) a une épaisseur $t$ dans une direction qui est perpendiculaire à une extension de la pluralité de couches empilées (110, 112) se situant approximativement entre 0,6 mm et 0,7 mm.

6. Structure polymère (100) selon l'une quelconque des revendications précédentes, dans laquelle le sorbant (140) a une masse par $m^2$ de la superficie de la structure polymère qui vaut au moins 250 $g/m^2$.

7. Structure polymère (200) selon l'une quelconque des revendications précédentes, dans laquelle la première direction de la première pluralité de brins (220) est décalée de la seconde direction de la seconde pluralité de brins (222) selon un angle $\alpha$ se situant approximativement entre 45 degrés et 135 degrés.

8. Procédé (300) de production de la structure polymère selon l'une quelconque des revendications 1 à 7, le procédé comprenant:

l'impression 3D d'une première couche comprenant une première pluralité de brins qui sont positionnés sensiblement parallèles les uns aux autres dans une première direction (302);
l'impression 3D d'une seconde couche comprenant une seconde pluralité de brins qui sont positionnés sensiblement parallèles les uns aux autres dans une seconde direction (304),
dans lequel la première couche et la seconde couche sont empilées pour former une pluralité d'espaces dans les première et seconde couches empilées (306);
la fourniture d'une émulsion (E) comprenant un solvant et un sorbant (S);
l'application de l'émulsion (E) sur et dans les première et seconde couches empilées (310); et
l'élimination du solvant de l'émulsion (E) appliquée, pour obtenir la structure polymère (312).

9. Procédé selon la revendication 8, dans lequel le solvant comprend un solvant organique, facultativement dans lequel le solvant organique est choisi dans le groupe constitué d'acétate d'éthyle, de dichlorométhane, d'un alcool, d'un éther, d'acétone, ou d'une combinaison de ceux-ci, facultativement dans lequel le solvant organique comprend ou est constitué sensiblement d'acétone.

10. Procédé selon la revendication 8 ou la revendication 9, dans lequel l'émulsion comprend 10 à 13 parties en poids du solvant pour 20 parties en poids du sorbant.

11. Procédé selon l'une quelconque des revendications 8 à 10 précédentes, dans lequel l'émulsion (E) est appliquée sur et dans les première et seconde couches empilées en disposant l'émulsion (E) sur une surface des première et seconde couches empilées et en appliquant une pression.

12. Procédé selon l'une quelconque des revendications 8 à 11 précédentes, dans lequel le solvant est éliminé de l'émulsion en augmentant une température des première et seconde couches empilées.

13. Procédé selon l'une quelconque des revendications 8 à 12 précédentes, dans lequel l'émulsion est appliquée sur une surface supérieure et une surface inférieure des première et seconde couches empilées.

14. Dispositif de filtre (10) comprenant:

un boîtier (12) ayant au moins une entrée (14) et au moins une sortie (16);
une pluralité des structures polymères (100, 200) selon l'une quelconque des revendications 1 à 7 reçues dans le boîtier (12),

dans lequel une face (102) de l'une des structures polymères (100, 200) fait face vers une face (104) d'une structure polymère (100, 200) adjacente et à une distance de la structure polymère (100, 200) adjacente de façon à former un canal (18) entre elles, dans lequel le canal est en communication fluidique avec l'entrée (14), au moins au nombre d'une, et la sortie (16), au moins au nombre d'une.

15. Dispositif de filtre (10) selon la revendication 14, dans lequel chaque structure polymère de la pluralité des structures polymères (100, 200) reçues dans le boîtier (12) du dispositif de filtre (10) comprend une structure entrelacée tridimensionnelle des première et seconde pluralités de brins (120, 122 et 220, 222).

FIG. 1A

FIG. 1B

FIG. 1C

FIG. 1D

FIG. 2A

FIG. 2B

300

302 — 3D-printing a first layer comprising a first plurality of strands that are positioned substantially parallel to each other in a first direction

304 — 3D-printing a second layer comprising a second plurality of strands that are positioned substantially parallel to each other in a second direction,

306 — wherein the first layer and the second layer are stacked to form a plurality of spaces in the first and the second stacked layers

308 — providing an emulsion comprising a solvent and a sorbent, mixed in a ratio to obtain an acceptable viscosity

310 — applying the emulsion on and into the first and the second stacked layers

312 — removing the solvent from the applied emulsion to obtain the polymeric structure

FIG. 3

FIG. 4A

FIG. 4B

FIG. 5

10

12

14

16

18 100 102 104

FIG. 6

FIG. 7A

FIG. 7B

FIG. 7C

FIG. 7D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022132397 A1
- EP 4186681 A1
- WO 2022207127 A1
- US 2020122071 A1